# EUROPÄISCHE PATENTANMELDUNG

(11) **EP 3 450 401 A1**
(43) Veröffentlichungstag der Anmeldung: **06.03.2019**
(21) Anmeldenummer: 17204067.7
(22) Anmeldetag: 28.11.2017
(51) Int. Cl.: C02F 1/44

(54) **VORRICHTUNG UND VERFAHREN ZUM AUFBEREITEN UND ABFÜLLEN VON WASSER**

(30) Priorität: 04.09.2017 DE 102017215447
(71) Anmelder: KRONES Aktiengesellschaft, 93073 Neutraubling (DE)
(72) Erfinder: Feilner, Roland, 93073 Neutraubling (DE); Oehmichen, Thomas, 93073 Neutraubling (DE); Runge, Thorsten, 93073 Neutraubling (DE); Hoeller, Stefan, 93073 Neutraubling (DE); Keller, Martin, 93073 Neutraubling (DE)
(74) Vertreter: Grünecker Patent- und Rechtsanwälte PartG mbB

(57) **Zusammenfassung**

Die Erfindung betrifft eine Vorrichtung (100) zum Aufbereiten und Abfüllen von Wasser, umfassend: eine Wasseraufbereitungsvorrichtung (101) mit wenigstens einem Filtrationsmodul (102a), wenigstens eine Abfüllvorrichtung (123) zum Abfüllen, insbesondere zum Abfüllen von Behältern (124), von durch die Wasseraufbereitungsvorrichtung (101) aufbereiteten Wassers, und wobei die Wasseraufbereitungsvorrichtung (101) direkt (121) an die Abfüllvorrichtung (123) gekoppelt ist.

## Beschreibung

### Stand der Technik

Die Erfindung betrifft eine Vorrichtung der im Oberbegriff des Patentanspruchs 1 angegebenen Art sowie ein Verfahren der im Oberbegriff des Patentanspruchs 8 angegebenen Art.

Zur Verarbeitung von Wasser in der Lebensmittel- und Getränkeindustrie ist es üblich zu verarbeitendes Wasser verschiedenen Filtrations- und Sterilisierungsverfahren zu unterziehen, um den speziellen hygienischen Anforderungen der Lebensmittel- und Getränkeindustrie gerecht werden zu können.

Herkömmliche Anlagen und Vorrichtungen zur Durchführung von Filtrations- und Sterilisierungsverfahren von Wasser sind mitunter sehr aufwendig und komplex.

Darüber hinaus können herkömmliche Vorrichtungen und Verfahren zum Aufbereiten und Abfüllen von Wasser unerwünschte zusätzliche Gesundheitsrisiken bergen.

So können beispielsweise im Rahmen herkömmlicher Sterilisationsverfahren unter Verwendung von Ozon potenziell krebserregende Nebenprodukte, wie beispielsweise Bromate, durch die Oxidation von bromidhaltigen Wässern, entstehen.

Auch ist es üblich Wasser oft zentral aufzubereiten, zu puffern und anschließend auf eine unterschiedliche Anzahl an Füllern zu verteilen. Bei dieser Pufferung und Verteilung besteht die Gefahr einer Rekontamination. Dieses Risiko muss aufwändig durch entsprechende Prozesse und Sicherheitsvorkehrungen minimiert werden.

### Aufgabe

Es ist somit Aufgabe der Erfindung eine Vorrichtung und ein Verfahren zum Aufbereiten und Abfüllen von Wasser zu verbessern, beispielsweise insbesondere hinsichtlich der Hygiene, dem Footprint, Gesundheitssicherheit, Wirtschaftlichkeit und Effizienz.

### Lösung

Dies wird erfindungsgemäß durch eine Vorrichtung nach Anspruch 1 und ein Verfahren nach Anspruch 8 erreicht.

Vorteilhafte Ausführungsformen und Weiterbildungen sind Gegenstand der Unteransprüche.

Eine erfindungsgemäße Vorrichtung zum Aufbereiten und zum Abfüllen von Wasser, beispielsweise zum Abfüllen von Wasser in Behälter, z.B. Flaschen, im Rahmen einer Getränkeabfülllanlage kann beispielsweise folgende Komponenten bzw. Module umfassen:
- wenigstens eine Wasseraufbereitungsvorrichtung mit wenigstens einem Filtrationsmodul, sowie
- wenigstens eine Abfüllvorrichtung zum Abfüllen, insbesondere zum Abfüllen von Behältern, von durch die Wasseraufbereitungsvorrichtung aufbereiteten Wassers.

Dabei kann die Vorrichtung zum Aufbereiten und zum Abfüllen von Wasser so konfiguriert bzw. so ausgelegt sein, dass die Wasseraufbereitungsvorrichtung direkt an die Abfüllvorrichtung gekoppelt sein kann.

Dabei kann unter der beispielhaften direkten Kopplung zwischen der Wasseraufbereitungsvorrichtung und der Abfüllvorrichtung insbesondere verstanden werden, dass zwischen der Wasseraufbereitungsvorrichtung und der Abfüllvorrichtung kein Zwischenspeicher oder Entlastungsspeicher oder Entkopplungsspeicher angeordnet ist, worin aufbereitetes Wasser vor einer Zuführung zur Abfüllvorrichtung, zwischengespeichert werden könnte.

Die Wasseraufbereitungsvorrichtung und die Abfüllvorrichtung sind mit anderen Worten unmittelbar miteinander verbunden, sodass Wasser von der Wasseraufbereitungsvorrichtung, d.h. durch die Wasseraufbereitungsvorrichtung aufbereitetes Wasser, direkt und ohne Umwege in die Abfüllvorrichtung strömen kann, wo es direkt in Behälter abgefüllt werden kann.

Der Weg von aufbereitetem Wasser von der Wasseraufbereitungsvorrichtung, bzw. der Weg vom letzten Modul der Wasseraufbereitungsvorrichtung, z.B. einem (einzigen oder letztem) Filtrationsmodul und/oder einem (einzigen oder letztem) Umkehrosmosemodul, zur Abfüllvorrichtung kann also frei von jeglichen zwischengeschalteten Modulen oder Bauteilen, wie z.B. Ventilen oder Pumpen, sein. Es sei angemerkt, dass es jedoch möglich sein kann, zwischen dem einem/dem letzten Modul der Wasseraufbereitungsvorrichtung und der Abfüllvorrichtung, Zuleitungen und/oder Ableitungen für die Zufuhr oder die Abfuhr von Reinigungsflüssigkeiten und/oder zusätzliche Ableitungen für das aufbereitete Wasser - z.B. um kurzfristig auf Gully zu fahren - vorgesehen sein können.

Die vorliegende Erfindung ermöglicht es unter anderem auf herkömmliche spezielle Zwischenspeicher oder Entlastungsspeicher oder Entkopplungsspeicher oder Pufferspeicher für aufbereitetes Wasser, welche zwischen einer Abfüllvorrichtung und einer Wasseraufbereitungsvorrichtung angeordnet sind, zu verzichten.

Die Vorrichtung kann gegenüber herkömmlichen Vorrichtungen somit beispielsweise kompakter und einfacher gestaltet werden.

Insbesondere können die Länge der Strömungswege bzw. die Strecken zwischen Wasseraufbereitungsvorrichtung und Abfüllanlage im Vergleich zu herkömmlichen Anlagen reduziert bzw. minimiert werden.

Diese mögliche Verkürzung der benötigten Strömungswege bzw. Strecken die das aufbereitete Wasser innerhalb der Vorrichtung zurücklegen muss führt insbesondere zu dem Effekt, dass eine Rekontamination mit Keimen vermieden bzw. reduziert werden kann und eine sterile bzw. aseptische Betriebsumgebung bzw. eine sterile bzw. aseptische Handhabung des aufbereiteten und abzufüllenden Wassers erreicht bzw. gewährleistet werden kann, da beispielsweise das aufbereitete Wasser weniger Zeit in der Vorrichtung zum Aufbereiten und zum Abfüllen von Wasser verbringen kann, sowie das Wasser innerhalb der Vorrichtung weniger oder gar nicht stillsteht, und weniger in Kontakt mit Bauteilen der Vorrichtung treten kann.

Somit kann beispielsweise auf herkömmliche aufwendige Maßnahmen zur Sterilisierung des Wassers, wie eine Behandlung mit Ozon und/oder Ultraviolettstrahlung (UV) und/oder Chlor und/oder Chlordioxid verzichtet werden. Beispielsweise und insbesondere dank einem möglichen Verzicht auf eine Ozonbehandlung des Wassers kann die Bildung von gesundheitsschädlichen Bromate, welches kanzerogen wirken können und sich aus Ozon und im Wasser gelösten Brom bilden können, verhindert werden. Bislang wurde stets davon ausgegangen, dass nur durch eine aufwendige Sterilisierung des aufbereiteten Wassers gewährleistet werden kann, dass das Wasser steril abgefüllt werden kann.

Die Strömungswege für abzufüllendes bzw. aufbereitetes Wasser innerhalb der Abfüllvorrichtung können als Zwischenpuffer für abzufüllendes bzw. aufbereitetes Wasser dienen.

Beispielsweise kann die Abfüllvorrichtung einen Zwischenpuffer, z.B. in Form einer Ringkammer oder Ringleitung oder eines Ringkessels, zum Zwischenpuffern von aus der Wasseraufbereitungsvorrichtung zugeführtem Wasser aufweisen, mittels dessen z.B. einzelne Abfüllventile der Abfüllvorrichtung versorgt werden können.

Beispielsweise kann insbesondere die Abfüllvorrichtung bzw. die Füllmaschine mehrere Abfüllstationen aufweisen, an denen Behälter mit Wasser befüllt werden können und wobei das abzufüllende Wasser über eine Ringkammer oder Ringleitung oder einen Ringkessel auf die verschiedenen Abfüllstationen verteilt werden kann.

Beispielsweise kann die Ringkammer oder die Ringleitung oder der Ringkessel oberhalb der Abfüllstationen angeordnet sein. Somit ist eine besonders platzsparende Vorrichtung möglich. Insbesondere kann der Füllstand in der Ringkammer oder der Ringleitung oder dem Ringkessel oberhalb der möglichen Abfüllstationen der Abfüllvorrichtung liegen.

Besagte beispielhafte Ringkammer oder Ringleitung bzw. beispielhafter Ringkessel der Abfüllvorrichtung kann dann als Zwischenpuffer bzw. Zwischenspeicher für das aus der Wasseraufbereitungsvorrichtung zugeführte aufbereitete und abzufüllende Wasser dienen.

Beispielsweise kann dabei der mögliche Zwischenpuffer der Abfüllvorrichtung oder die möglichen direkten Zu- und/oder Abführleitungen für Wasser des Zwischenpuffers mit aus dem Stand der Technik bekannten Mitteln für eine Karbonisierung des Wassers versehen bzw. ausgestattet sein.

Besagtes beispielhaftes wenigstens eine Filtrationsmodul kann beispielsweise konfiguriert sein zur Durchführung eines Membrantrennverfahrens bzw. einer Membranfiltration von Wasser, bzw. der Wasseraufbereitungsvorrichtung zugeführtem Wasser bzw. Rohwasser.

Beispielsweise kann das Filtrationsmodul oder eine Mehrzahl von Filtrationsmodulen konfiguriert sein zur Durchführung einer Mikrofiltration und/oder Ultrafiltration und/oder Nanofiltration des aufzubereitenden Wassers. Besagte beispielhafte Filtrationsmöglichkeiten können es ermöglichen steriles bzw. aseptisches Wasser für die Abfüllvorrichtung bereitzustellen.

Beispielsweise können unter anderem durch eine Ultrafiltration unerwünschte Partikel, Viren oder Sporen aus dem aufzubereitenden Wasser bzw. aus dem Rohwasser bis zu einer Größe von 0,02 Mikrometern entfernt werden, bzw. beispielsweise Keimzahlen von weniger als einem Keim pro zehn 1-Liter-Behälter erreicht werden.

Es ist jedoch möglich auch andere Filtrationsverfahren in dem Filtrationsmodul / den Filtrationsmodulen einzusetzen.

Die Wasseraufbereitungsvorrichtung kann beispielsweise auch eine Mehrzahl von Filtrationsmodulen aufweisen, wobei die Filtrationsmodule unabhängig voneinander betreibbar sind, bzw. einzeln oder in Gruppen betreibbar bzw. steuerbar sein können.

Dies kann beispielsweise, je nach Betriebssituation bzw. Betriebsanforderung, es ermöglichen, die Kapazität der Vorrichtung, z.B. durch Hinzuschalten oder Abschalten einzelner Filtrationsmodule, zu variieren, um beispielsweise unter anderem eine Überströmung oder einen Engpass von abzufüllenden Wasser an der Abfüllvorrichtung vermeiden zu können.

Zudem kann die Vorrichtung bzw. die Wasseraufbereitungsvorrichtung so konfiguriert sein, dass, wenn die Vorrichtung z.B. über eine Mehrzahl von Filtrationsmodulen verfügt, ein Teil der Filtrationsmodule während des Betriebs der Vorrichtung gereinigt und/oder rückgespült werden kann, d.h. eine Reinigung bzw. Rückspülung von Filtrationsmodulen kann während des Betriebes der Vorrichtung erfolgen. Mit anderen Worten kann z.B. während des Betriebs der Vorrichtung bzw. der Wasseraufbereitungsvorrichtung ein Teil der Filtrationsmodule filtern während ein anderer Teil gereinigt werden kann. Die Abfüllvorrichtung kann im Übrigen wenigstens einen Füllstandsmesser bzw. Füllstandssensor aufweisen, welcher dazu konfiguriert sein kann, einen Wasserfüllstand in der Abfüllvorrichtung zu messen bzw. der dazu konfiguriert sein kann, zu messen wie viel Wasser durch die Abfüllvorrichtung abgefüllt wurde. Besagter möglicher beispielhafter Füllstandsmesser bzw. Füllstandssensor kann dabei unter anderem zur genaueren Messung der Abfüllmenge einen Mengenzähler aufweisen und/oder z.B. mit möglichen Mengenzählern in Leitungen der Abfüllvorrichtung verbunden sein.

Die Vorrichtung zum Aufbereiten und Abfüllen von Wasser kann dabei so konfiguriert sein, dass die Wasseraufbereitungsvorrichtung in Abhängigkeit der Messungen des Füllstandsmesser zu steuern und beispielsweise je nach gemessenem Füllstand von Wasser in der Abfüllvorrichtung die Wasseraufbereitungsvorrichtung bzw. die Filtrationsmodule so steuern bzw. die Kapazität der Wasseraufbereitungsvorrichtung, z.B. durch Regelung des Rohwasserzuflusses oder durch Hinzuschalten oder Abschalten einzelner Filtrationsmodule, so zu regulieren, dass beispielsweise entweder mehr oder weniger Wasser aufbereitet wird bzw. mehr oder weniger aufbereitetes Wasser der Abfüllvorrichtung zur Verfügung gestellt werden kann bzw. der Abfüllvorrichtung zugeführt werden kann.

So kann beispielsweise auf schwankende Wasserabnahmemengen der Abfüllvorrichtung reagiert werden.

Die hier beispielhaft beschriebene Vorrichtung zum Aufbereiten und Abfüllen von Wasser kann auf Grund ihrer Variabilität und Ihrer Auslegung eine hygienische Produktion ermöglichen, die optimal auf eine sich ändernde Abnahmekapazität der Abfüllvorrichtung angepasst werden kann.

Mit anderen Worten kann die beispielhafte Vorrichtung zum Aufbereiten und Abfüllen von Wasser eine hygienische Just-in-time-Produktion bzw. eine bedarfssynchrone Produktion ermöglichen.

Die Vorrichtung zum Aufbereiten und Abfüllen von Wasser kann dabei zudem so konfiguriert sein, dass im Fall einer Überfüllung der Abfüllvorrichtung überschüssiges Wasser zurück an die Wasseraufbereitungsvorrichtung geleitet werden kann, z.B. über eine Rückführleitung. In vorteilhafter Weise kann in der Rückführleitung eine aseptische Absperrarmatur vorgesehen sein. Beispielsweise kann dies eine aseptische Rückschlagarmatur in Verbindung mit einem aseptischen Absperrventil sein. Hierdurch kann beispielsweise verhindert werden, dass Rohwasser auf die Seite des aufbereiteten Wassers kommt und dieses verunreinigt.

Zusätzlich kann die Wasseraufbereitungsvorrichtung wenigstens ein Umkehrosmosemodul aufweisen, welches dazu konfiguriert sein kann eine Umkehrosmose bzw. eine Reversosmose durchzuführen.

Dieses beispielhafte optionale Umkehrosmosemodul kann dabei beispielsweise dem Filtrationsmodul bzw. den Filtrationsmodulen nachgeordnet sein und z.B. dazu dienen, den Salzgehalt des aufzubereitenden Wassers zu regulieren, um unter anderem beispielweise die elektrische Leitfähigkeit bzw. den Leitwert des Wassers regulieren zu können.

Es ist jedoch auch denkbar, dass besagtes wenigstens eine beispielhafte optionale Umkehrosmosemodul auch vor einem bzw. vor den Filtrationsmodulen angeordnet sein kann, also wenigstens ein Umkehrosmoseverfahren vor einem Filtrationsverfahren durch ein Filtrationsmodul durchgeführt werden kann.

Ebenso ist denkbar dass besagtes wenigstens eine beispielhafte optionale Umkehrosmosemodul parallel zu einem Filtrationsmodul bzw. parallel zu den Filtrationsmodulen angeordnet sein kann. Dabei kann z.B. dem besagten wenigstens einen beispielhaften optionalen Umkehrosmosemodul Rohwasser zugeführt werden unabhängig von einer/der Rohwasserzuführung für das Filtrationsmodul bzw. unabhängig von der/den Rohwasserzuführung(en) der Filtrationsmodule.

Das durch das Filtrationsmodul bzw. durch die Filtrationsmodule gelaufene bzw. gefilterte Wasser bzw. Rohwasser kann dann beispielsweise mit durch besagtes optionales Umkehrosmosemodul gelaufenem Wasser bzw. Rohwasser vermischt werden, bevor das auf diese Weise vermischte bzw. verschnittene Wasser zur Abfüllvorrichtung weitergeleitet werden kann.

Der Vollständigkeit halber sei erwähnt, dass sämtliche Bauteile, insbesondere z.B. Wasserleitungen, der Vorrichtung hygienisch bzw. aseptisch ausgeführt sein können bzw. in einem hygienischer Arbeitsumgebung betrieben werden können, um einen hohen hygienischen Standard gewährleiten zu können.

Insbesondere kann die Vorrichtung zum Aufbereiten und Abfüllen von Wasser, insbesondere die Wasseraufbereitungsvorrichtung so konfiguriert sein, dass eine Reinigung der Komponenten und Module, z.B. der Filtrationsmodule, durch Rückspülung erfolgen kann.

Die hier beschriebene beispielhafte Vorrichtung zum Aufbereiten und Abfüllen von Wasser bzw. die Wasseraufbereitungsvorrichtung kann insbesondere eine blockartige Struktur aufweisen, welche eine Mehrzahl von Modulen, beispielsweise Filtrationsmodule und/oder Umkehrosmosemodule, umfassen kann, die einzeln und/oder in Gruppen betrieben werden können, und einzeln und/oder in Gruppen zu-und abgeschaltet werden können.

Auch können beispielsweise, wenn vorhanden, mehrere Filtrationsmodule zu einem Filtrationsblock bzw. zu Filtrationsblöcken zusammengefasst werden.

Auch kann beispielsweise eine individuelle und/oder gruppenweise Regelung von etwaigen Pumpenleistungen der besagten Module erfolgen.

Dabei kann die Vorrichtung zum Aufbereiten und Abfüllen von Wasser bzw. die Wasseraufbereitungsvorrichtung zudem auch derart konfiguriert sein, dass einzelne Komponenten und Module, z.B. einzelne Filtrationsmodule, getrennt und unabhängig voneinander reinigbar sind, z.B. durch Rückspülen, so dass eine Reinigung während des Produktionsbetriebs möglich ist, also eine kontinuierliche Produktion ermöglicht werden kann. So kann beispielsweise, insbesondere das Reinigen durch Rückspülen während eines Füllerstopps der Abfüllvorrichtung erfolgen.

Beispielsweise können diejenigen Filtrationsmodule, die z.B. in einer aktuellen Betriebssituation abgeschaltet bzw. heruntergefahren sind bzw. sich in einem Reinigungsbetriebsmodus befinden, gereinigt werden, während andere Filtrationsmodule in einem Produktionsbetriebsmodus sein können, um die kontinuierliche Produktion der Vorrichtung zum Aufbereiten und Abfüllen von Wasser gewährleisten zu können.

Die hier beschriebene beispielhafte Vorrichtung zum Aufbereiten und Abfüllen von Wasser bzw. die beschriebene beispielhafte Wasseraufbereitungsvorrichtung kann dabei wenigstens einen Anschluss an eine Rohwasserversorgung aufweisen, über den die Vorrichtung bzw. die Wasseraufbereitungsvorrichtung mit aufzubereitendem Wasser versorgt werden kann.

Besagter möglicher beispielhafter Rohwasserversorgungsanschluss kann ein Ventil, z.B. ein Absperrventil, aufweisen um die Rohwasserversorgung regulieren zu können, z.B. um die Rohwasserversorgung unterbrechen zu können.

Es ist dabei jedoch auch denkbar, dass hier beschriebene beispielhafte Vorrichtung zum Aufbereiten und Abfüllen von Wasser bzw. die beschriebene beispielhafte Wasseraufbereitungsvorrichtung mehrere Rohwasserversorgungen bzw. mehrere Anschlüsse zur Rohwasserversorgung aufweisen kann, um z.B. verschiedene Module, beispielsweise einzelne Filtrationsmodule und/oder Umkehrosmosemodule individuell oder gruppenweise mit Rohwasser versorgen bzw. beliefern zu können.

Den beispielhaften möglichen Modulen der Wasseraufbereitungsvorrichtung, also beispielsweise den Filtrationsmodulen bzw. den Umkehrosmosemodulen, können ebenfalls Ventile, z.B. Absperrventile, vorgeordnet sein, beispielsweise an den Zuläufen der jeweiligen Module abgeordnet sein, um den Betrieb der Module bzw. den Zulauf von aufzubereitendem Wasser an den jeweiligen Modulen regulieren zu können und z.B. wenn erforderlich unterbrechen zu können.

Ein beispielhaftes Verfahren zum Aufbereiten und Abfüllen von Wasser kann dabei einen, einige, oder alle der folgenden beispielhaften Schritte umfassen:
- eine Aufbereitung von Wasser in einer Wasseraufbereitungsvorrichtung mit wenigstens einem Filtrationsmodul,
- eine direkte unmittelbare Weiterleitung von durch die Wasseraufbereitungsvorrichtung aufbereitetem Wasser an eine Abfüllvorrichtung zum Abfüllen, insbesondere zum Abfüllen von Behältern.

Dabei kann das wenigstens eine Filtrationsmodul, oder eine Mehrzahl von Filtrationsmodulen eine Mikrofiltration und/oder Ultrafiltration und/oder Nanofiltration des aufzubereitenden Wassers durchführen, und/oder die Wasseraufbereitungsvorrichtung eine Umkehrosmose des aufzubereitenden Wassers durchführen, bevor das aufbereitete Wasser direkt und unmittelbar an die Abfüllvorrichtung weitergeleitet wird.

Anders ausgedrückt, kann der Weg zwischen der Wasseraufbereitungsvorrichtung bzw. dem (einzigen oder dem letzten) Filtrationsmodul und der Abfüllvorrichtung minimiert werden, und der Weg frei sein von Ventilen oder Zwischenspeichervorrichtungen zum Zwischenspeichern von aufbereitetem bzw. gefilterten Wasser, so dass eine unmittelbare und direkte Kopplung zwischen der Wasseraufbereitungsvorrichtung und der Abfüllvorrichtung realisiert werden kann. Dadurch kann insbesondere vermieden werden, dass beispielsweise Membranen der Filtrationsmodule durch Zu- oder Abschaltvorgänge von Pumpen oder Armaturen, z.B. aufgrund von Druckstößen beschädigt werden.

Die besagte beispielhafte Umkehrosmose kann dabei insbesondere beispielsweise nach dem Durchlauf des Wassers durch das Filtrationsmodul bzw. die Filtrationsmodule erfolgen, und dazu verwendet werden den Salzgehalt des aufzubereitenden Wassers zu regulieren, um unter anderem beispielweise die elektrische Leitfähigkeit bzw. den Leitwert des Wassers regulieren zu können.

Dabei kann die elektrische Leitfähigkeit bzw. der Leitwert des Wassers beispielsweise in Mikrosiemens (µS) oder Mikrosiemens per Zentimeter (µS/cm) gemessen bzw. angegeben werden.

Besagter Leitwert bzw. besagte elektrische Leitfähigkeit des Wassers kann dabei vor, während und nach der Aufbereitung durch die Wasseraufbereitungsvorrichtung gemessen werden.

Beispielsweise kann das die optionale Umkehrosmose durchlaufende Wasser vor der Weiterleitung variabel, z.B. in Bezug auf eine Vorgabe eines Leitwerts, mit Wasser das zuvor verschiedene Filtrationsmodule durchlaufen hat vermischt werden.

Es ist beispielsweise also denkbar, dass die Wasseraufbereitungsvorrichtung wenigstens eine Umkehrosmose des aufzubereitenden Wassers durchführen kann und wenigstens eine Mikrofiltration und/oder Ultrafiltration und/oder Nanofiltration des aufzubereitenden Wassers durchführen kann und in Abhängigkeit eines vorgebbaren Leitwerts für das abzufüllende Wasser, dass z.B. durch Mikrofiltration und/oder Ultrafiltration und/oder Nanofiltration filtrierte Wasser mit Wasser aus der wenigstens einen Umkehrosmose vermischen kann, bevor das aufbereitete Wasser direkt und unmittelbar an die Abfüllvorrichtung weitergeleitet werden kann.

Dabei kann die Vorrichtung zur Aufbereitung und Abfüllung von Wasser bzw. die Wasseraufbereitungsvorrichtung z.B. eine Kontrollsteuereinheit aufweisen, welche dazu konfiguriert sein kann, die Strömungswege und/oder Mischverhältnisse und/oder Leistungen, z.B. Filtrationsleistungen und/oder Pumpenleistungen einzelner Module, steuern und regeln zu können, beispielsweise in Abhängigkeit eines Sensors zur Messung des Leitwerts von Wasser in der Wasseraufbereitungsvorrichtung und/oder in Abhängigkeit eines Sensors, z.B. Füllstandsmesser, zur Messung eines Füllstands der Abfüllvorrichtung.

Die mögliche beispielhafte wenigstens eine Umkehrosmose kann dabei unter anderem im Kreislaufverfahren durchgeführt werden, um die Funktion der Umkehrosmose nicht zu beinträchtigen bzw. nicht zu unterbrechen.

Die optionale Umkehrosmose kann in/mit einem regelbaren Bypass durchgeführt werden. Anders ausgedrückt kann die Wasseraufbereitungsvorrichtung so konfiguriert sein, das wahlweise, beispielsweise in Abhängigkeit eines vorgegebenen Leitwerts des Wassers, eine Umkehrosmose in einem möglichen Umkehrosmosemodul durchgeführt werden kann oder nicht, d.h. ein beispielhaftes mögliches Umkehrosmosemodul kann in einem Strömungsweg der Wasseraufbereitungsvorrichtung entweder zugeschaltet oder in einem Strömungswegbypass umgangen werden.

Dies kann z.B. ein direktes Verschneiden bzw. Vermischen von Wasser aus der Mikrofiltration und/oder Wasser aus der Ultrafiltration und/oder Wasser aus der Nanofiltration mit Wasser aus der Umkehrosmose ermöglichen bzw. erleichtern.

Zudem kann z.B. ein Füllstand bzw. eine Füllhöhe der Abfüllvorrichtung bestimmt werden und wobei in Abhängigkeit des bestimmten Füllstandes bzw. der bestimmten Füllhöhe der Abfüllvorrichtung einzelne Komponenten der Wasseraufbereitungsvorrichtung, beispielsweise einzelne Filtrationsmodule und/oder einzelne Umkehrosmosemodule abgeschaltet und/oder zugeschaltet und/oder gesteuert werden können, um beispielsweise eine bedarfssynchrone bzw. bedarfsangepasste Produktion ermöglichen zu können.

Die Leistung der Wasseraufbereitungsvorrichtung bzw. der Filtration kann also durch partielles Abschalten und/oder Hinzuschalten variiert werden, z.B. um auf schwankende Abnahmekapazitäten der Abfüllvorrichtung reagieren zu können, wie auch zum Zweck des Rückspülens einzelner Module zur Zwischenreinigung von Modulen, z.B. von Filtrationsmodulen, auch bei laufendem Betrieb der Vorrichtung zur Aufbereitung und Abfüllung.

Im möglichen Fall einer Überfüllung der Abfüllvorrichtung bzw. im Fall eines Füllstopps bzw. Füllerstopps kann überschüssiges Wasser bzw. nicht von der Abfüllvorrichtung abgenommenes Wasser zurück geleitet werden an die Wasseraufbereitungsvorrichtung.

Beispielsweise kann das überschüssige Wasser bzw. das nicht von der Abfüllvorrichtung abgenommene Wasser zurück in ein Filtrationsmodul, beispielsweise in den Einlauf einer Membran eines Filtrationsmoduls, geleitet werden. Mit anderen Worten kann bereits aufbereitetes Wasser wieder einer Aufbereitung durch die Wasseraufbereitungsvorrichtung zugeführt werden.

Dabei kann beispielsweise wenigstens ein Teil von zurückgeleitetem überschüssigem Wasser zum Rückspülen von Filtrationsmodulen verwendet werden und/oder generell ein Teil des aufbereiteten Wassers zurückgeleitet werden zum Reinigen bzw. Rückspülen von Filtrationsmodulen.

Alternativ oder zusätzlich, kann bei Überfüllung der Abfüllvorrichtung bzw. bei einem Abfüllstopp bzw. bei einem Füllstopp, auch die Rohwasserzufuhr zur Vorrichtung unterbrochen werden.

Diese beispielhaften Maßnahmen bei Überfüllung der Abfüllvorrichtung bzw. bei einem Abfüllstopp kann dazu dienen, die Betriebsbedingungen bei einem Filtrationsmodul / bei den Filtrationsmodulen, z.B. die Betriebsbedingungen bei einer Membran eines Filtrationsmodules, konstant halten zu können.

Bei einem Abfüllstopp an der Abfüllvorrichtung kann beispielsweise die Abfüllunterbrechung dazu genutzt werden das Filtrationsmodul / die Filtrationsmodule und etwaige andere Module, wie z.B. ein Umkehrosmosemodul, der Wasseraufbereitungsvorrichtung zu regenerieren bzw. zu reinigen, z.B. durch Rückspülen.

Bei einem Abfüllstopp an der Abfüllvorrichtung kann beispielsweise nur Permeat in ein Filtrationsmodul (beispielsweise zur Mikrofiltration und/oder Ultrafiltration und/oder Nanofiltration) zurückgeleitet werden, und/oder, bei einem etwaig vorhandenen Umkehrosmosemodul / Umkehrosmoseschritt, nur Permeat in ein Umkehrosmosemodul zurückgeleitet werden.

Auch ist denkbar, dass dabei auch Retentat in ein Filtrationsmodul (beispielsweise zur Mikrofiltration und/oder Ultrafiltration und/oder Nanofiltration) zurückgeleitet werden kann, und/oder bei einem etwaig vorhandenen Umkehrosmosemodul / Umkehrosmoseschritt sowohl Permeat als auch Retentat in ein Umkehrosmosemodul zurückgeleitet werden kann.

Vor Inbetriebnahme der Vorrichtung zum Aufbereiten und Abfüllen von Wasser kann die Integrität der Vorrichtung, bzw. die Integrität einzelner, einiger oder aller Module, also des Filtrationsmoduls / der Filtrationsmodule und/oder des Umkehrsosmosemodules / der Umkehrosmosemodule, der Wasseraufbereitungsvorrichtung, geprüft werden, beispielsweise Druckbeaufschlagung, wobei beispielsweise gemessen wird wie schnell aufgebauter bzw. beaufschlagter Druck abgebaut wird.

Alternativ oder zusätzlich können, z.B. während des Produktionsbetriebes der Vorrichtung, an einem Auslauf eines Filtrationsmoduls, z.B. am Auslauf einer Membran eines Filtrationsmoduls, Integritätstests bzw. Qualitätstests durchgeführt werden, beispielsweise mittels Trinkwasseranalyseverfahren und/oder mittels Tracer-Zugabe, sowie Untersuchungen zum Nachweis bestimmter relevanter Keime durchgeführt werden.

Der beispielhafte modulare Aufbau der Vorrichtung zum Aufbereiten und Abfüllen von Wasser bzw. der Wasseraufbereitungsvorrichtung kann es unter anderem ermöglichen, dass besagte beispielhafte Integritätstests bzw. Qualitätstests für jedes einzelne Modul, z.B. jedes Filtrationsmodul und/oder jedes Umkehrosmosemodul durchgeführt werden kann.

Wird beispielsweise bei einem Modul ein Defekt, z.B. ein Membranbruch, festgestellt, braucht nur das jeweilige betroffene defekte Modul abgeschaltet werden und nicht gleich die ganze Anlage bzw. die ganze Wasseraufbereitungsvorrichtung bzw. die ganze Vorrichtung zum Aufbereiten und Abfüllen von Wasser.

Auch kann beispielsweise während eines Austausches und/oder Abschaltens und/oder Herunterfahrens eines Moduls, die Vorrichtung, also die Wasseraufbereitungsvorrichtung bzw. die ganze Vorrichtung zum Aufbereiten und Abfüllen von Wasser mit gleicher Leistung betrieben werden, indem z.B. die Leistung der anderen Module erhöht wird, oder ggf. mit reduzierter Leistung weiter gefahren werden. Stillstandszeiten der Vorrichtung können so vermieden bzw. reduziert werden.

Die Abfüllvorrichtung kann insbesondere hygienisch ausgeführt sein. Bei besonders hohen Reinheitsanforderungen kann diese auch aseptisch ausgeführt werden.

Die Abfüllvorrichtung kann dabei unter anderem in einen Reinraum integriert sein. Weiterhin kann die Abfüllvorrichtung mit Schaumreinigung, UV-Verschlussbehandlung und/oder Neck-Sterilizer ausgestattet sein. Voranstehende beispielhafte mögliche Ausführungsformen können insbesondere das Rekontaminationsrisiko noch weiter vermindern.

Zudem ist denkbar, für den Fall, dass beispielsweise an der Abfüllvorrichtung entsprechende hygienische Bedingungen nicht gewährleistet sein, dass geringste Mengen an Ozon in die Abfüllvorrichtung geleitet werden können. Damit kann z.B. für diesen Fall gewährleistet sein, dass die abgefüllte und verschlossene Flasche steril ist.

Darüber hinaus kann die Abfüllvorrichtung beispielsweise mit einer Blasmaschine, z.B. für die Abfüllung von PET-Flaschen, verbunden sein. Die Blasmaschine kann hygienisch, oder bei besonders hohen Reinheitsanforderungen auch aseptisch ausgeführt sein. Weiterhin kann der Blasmaschine eine hygienische Preformzuführung vorgeschaltet sein.

Der Vollständigkeit halber sei erwähnt, dass eine beispielhafte erfindungsgemäße Vorrichtung zum Aufbereiten und Abfüllen von Wasser dazu konfiguriert sein kann, einzelne, einige oder alle der hier beschriebenen beispielhaften Verfahrensschritte zur Aufbereitung und zur Abfüllung von Wasser durchführen zu können.

Zusammenfassend kann eine beispielhafte Vorrichtung bzw. eine beispielhaftes Verfahren gegenüber herkömmlichen Technologien zur Aufbereitung und zur Abfüllung von Wasser folgende Vorteile bieten:
- Hygienische Just-in-time-Produktion
- Einsparung von Komponenten wie spezieller zusätzlicher Zwischenspeicher bzw. Puffertanks zur Zwischenspeicherung von aufbereitetem Wasser
- Einsparung aufwendiger und potenziell gesundheitsgefährdender Maßnahmen, wie z.B. Sterilisierung von Wasser durch Ozon und/oder UV-Strahlung und/oder Behandlung Chlor oder Chlordioxid, Vermeidung von Bromatbildung
- Verringerung von Investitionskosten, bessere Energiebilanz und bessere Umweltverträglichkeit, geringere Produktionsverluste und geringeres Anlagenvolumen.

Folgende Figuren stellen beispielhaft dar:

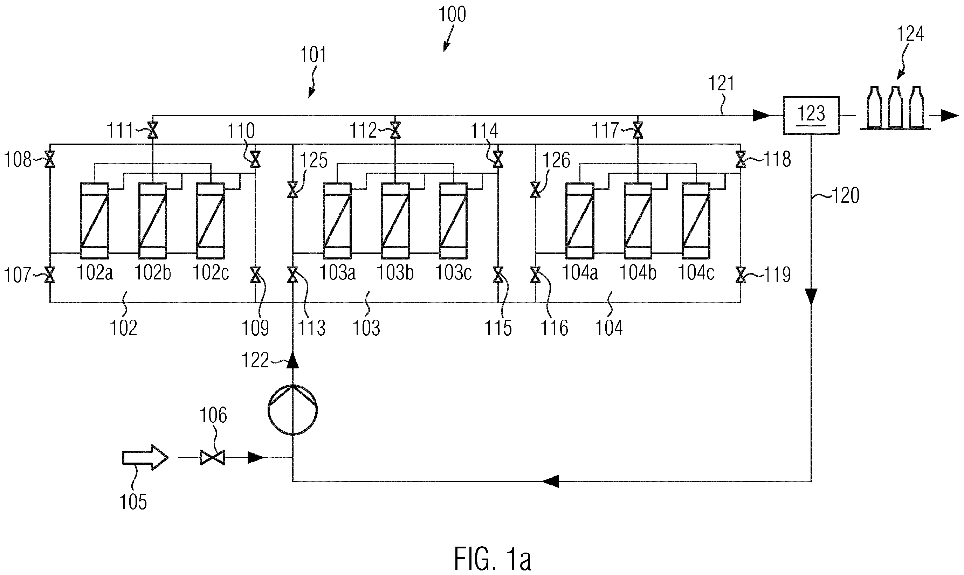

**Fig.1a****:** Beispiel für Vorrichtung zum Aufbereiten und Abfüllen von Wasser

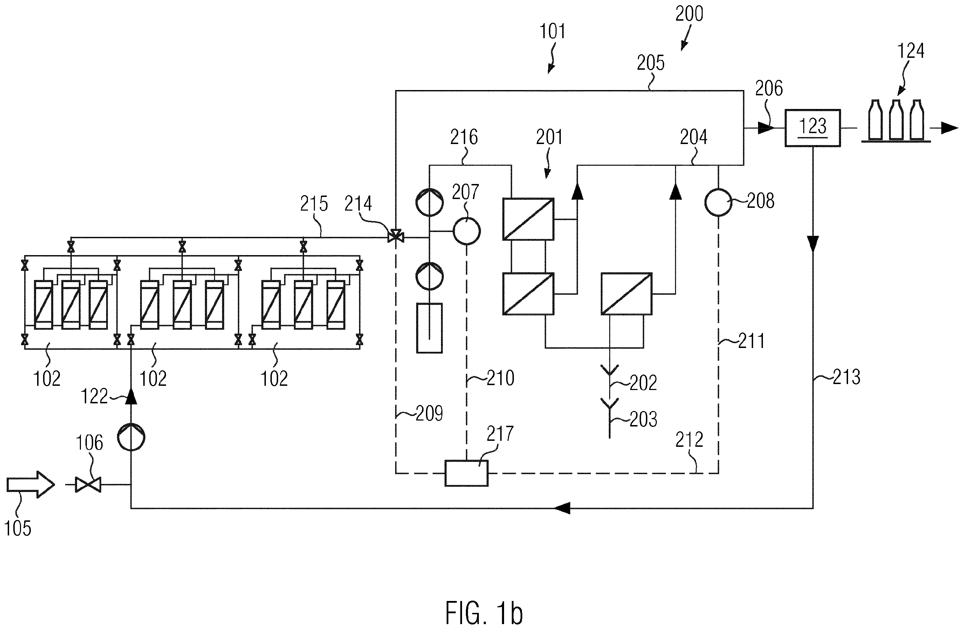

**Fig.1b****:** Weiteres Beispiel für Vorrichtung zum Aufbereiten und Abfüllen von Wasser

Die **Fig.1a** stellt beispielhaft und schematisch eine Vorrichtung 100 zum Aufbereiten und Abfüllen von Wasser dar.

Die Vorrichtung 100 kann dabei z.B. wie dargestellt eine Wasseraufbereitungsvorrichtung 101 umfassen. Die beispielhafte Wasseraufbereitungsvorrichtung kann beispielsweise mehrere Filtrationsmodule 102a, 102b, 102c, 103a, 103b, 103c, 104a, 104b, 104c aufweisen, welche z.B. konfiguriert sein können eine Membranfiltration zur Mikrofiltration und/oder Ultrafiltration und/oder Nanofiltration durchführen zu können. Besagte beispielhafte Filtrationsmodule sind beispielhaft in verschiedene Blöcke 102, 103, 104, wobei jeder beispielhafte Filtrationsblock drei Filtrationsmodule aufweist.

Diese Anzahl und Einteilung ist jedoch lediglich beispielhaft.

Die Vorrichtung 100 weist einen beispielhaften Anschluss 105 für Rohwasser auf, über den Rohwasser, also insbesondere nicht aufbereitetes Wasser, in die Vorrichtung 100 geleitet werden kann und über einen beispielhaften Strömungsweg 122 zu den beispielhaften Filtrationsmodulen 102a, 102b, 102c, 103a, 103b, 103c, 104a, 104b, 104c, bzw. zu den beispielhaften Filtrationsblöcken 102, 103, 104, geleitet werden kann.

Dem beispielhaften Anschluss 105 für Rohwasser kann eine Absperrvorrichtung, z.B. ein Absperrventil zugeordnet sein, über das der Zulauf von Rohwasser in die Vorrichtung geregelt werden kann, und beispielsweise bei Problem oder Defekten bzw. z.B. bei Überfüllung oder Abfüllstopp der Abfüllvorrichtung 123 die Rohwasserzufuhr unterbrochen werden kann.

Über entsprechende beispielhafte Strömungswege (durchgezogene Linien) und entsprechende beispielhafte Ventile 107, 108, 109, 110, 111, 112, 113, 114, 115, 116, 117, 118, 119, 125, 126, beispielhafte Mehrwegeventil, wie z.B. Zweiwegeventile oder Dreiwegeventile, sind die Filtrationsmodule 102a, 102b, 102c, 103a, 103b, 103c, 104a, 104b, 104c bzw. die Filtrationsblöcke 102, 103, 104 einzeln oder gruppenweise mit Rohwasser zum Filtern belieferbar.

Die Wasseraufbereitungsvorrichtung kann zudem über eine Vielzahl von Pumpen (nicht dargestellt) verfügen.

Ebenfalls kann die Wasseraufbereitungsvorrichtung so konfiguriert sein, bzw. können die beispielhaften Filtrationsmodule 102a, 102b, 102c, 103a, 103b, 103c, 104a, 104b, 104c bzw. die Filtrationsblöcke 102, 103, 104 so konfiguriert sein, dass besagte beispielhafte Filtrationsmodule bzw. beispielhafte besagte Filtrationsblöcke einzeln oder gruppenweise betrieben werden kann, so dass die Filtrationsleistung der Wasseraufbereitungsvorrichtung 101 variiert werden kann, beispielsweise durch Variation der Pumpenleistung und/oder durch abschalten oder zuschalten einzelner Filtrationsmodule oder Filtrationsblöcke, bzw. durch abtrennen oder hinzufügen einzelner Filtrationsmodule oder Filtrationsblöcke zum beispielhaften Strömungsweg 121 der direkt zur beispielhaften Abfüllvorrichtung 123 führen kann.

Die Wasseraufbereitungsvorrichtung 101 ist also durch die beispielhafte Strömungsverbindung 121 direkt und unmittelbar mit der Abfüllvorrichtung 123 verbunden. Die Vorrichtung 100 bzw. die Wasseraufbereitungsvorrichtung 101 weist also insbesondere keine speziellen Zwischenspeicher für aufbereitetes Wasser bzw. für Permeat auf.

Für den beispielhaften Fall, dass die Abfüllvorrichtung 123 kein aufbereitetes Wasser über die beispielhafte Strömungsverbindung 121 abnehmen kann, z.B. aufgrund einer Überfüllung oder eines Füllstopps, kann beispielsweise dieses nicht abgenommene Wasser zurück in den Eingang der Wasseraufbereitungsvorrichtung 101, bzw. zurück zu den Eingängen der Filtrationsmodule bzw. Filtrationsblöcke geleitet werden.

Zudem sind beispielhaft Behälter 124 dargestellt, welche von der Abfüllvorrichtung 123 befüllt worden sind / befüllt werden können.

Die **Fig.1b** stellt beispielhaft und schematisch eine weitere beispielhafte Vorrichtung 200 zum Aufbereiten und Abfüllen von Wasser dar, wobei die Vorrichtung 200 einige oder alle Merkmale der Vorrichtung 100 aufweisen kann, bzw. mit den Merkmalen der Vorrichtung 100 kompatibel ist.

Beispielweise kann die Vorrichtung 200 ebenfalls die beispielhaften Filtrationsmodule 102a, 102b, 102c, 103a, 103b, 103c, 104a, 104b, 104c, bzw. die beispielhaften Filtrationsblöcke 102, 103, 104 aufweisen, sowie die beispielhaften Ventile 107, 108, 109, 110, 111, 112, 113, 114, 115, 116, 117, 118, 119. Der Übersicht halber sind in der Fig.1b jedoch nur die Bezugszeichen 102, 103, 104 für die Filtrationsblöcke dargestellt.

Ebenso wie die Vorrichtung 100 kann auch die Vorrichtung 200 einen beispielhaften Anschluss 105 für Rohwasser aufweisen, über den Rohwasser, also insbesondere nicht aufbereitetes Wasser, in die Vorrichtung 200 geleitet werden kann und über einen beispielhaften Strömungsweg 122 zu den beispielhaften Filtrationsmodulen bzw. zu den beispielhaften Filtrationsblöcken 102, 103, 104, geleitet werden kann.

Neben den beispielhaften Filtrationsblöcken 102, 103, 104 bzw. den beispielhaften Filtrationsmodulen kann die Vorrichtung wenigstens ein Umkehrosmosemodul bzw. einen Umkehrosmoseblock 201 mit wenigstens einem oder einer Mehrzahl von Umkehrosmosemodulen aufweisen.

Beispielsweise dargestellt ist ein zwei-stufiger Umkehrosmoseblock 201, welche in der ersten Stufe zwei beispielhaft parallel geschaltete Umkehrosmosemodule aufweisen kann, wobei z.B. das Retentat dieser beiden Umkehrosmosemodule einem weiteren dritten Umkehrosmosemodul (in der zweiten Stufe) zur Erhöhung der Ausbeute zugeführt werden kann. Die Permeatströme der ersten und zweiten Stufe können dabei zusammengeführt werden und das Retentat der zweiten Stufe bzw. des dritten Umkehrosmosemodules kann in einen beispielhaften Gully 203 abgeführt werden.

Die Vorrichtung 200 kann dabei so konfiguriert sein, dass Wasser bzw. Rohwasser was durch einzelne, einige oder alle Filtrationsmodule bzw. durch einzelne, einige oder alle Filtrationsblöcke gelaufen ist, über die Strömungswege 215 und 205 direkt und unmittelbar an die beispielhafte Abfüllvorrichtung 123 geleitet werden kann.

Analog zu Fig.1a sind beispielhaft von der Abfüllvorrichtung 123 abgefüllte Behälter 124 dargestellt.

Die beispielhafte mögliche Umkehrosmose durch den beispielhaften Umkehrosmoseblock 201 bzw. durch ein beispielhaftes Umkehrosmosemodul kann also wahlweise umgangen werden.

Alternativ oder zusätzlich kann jedoch auch beispielsweise das Wasser bzw. Rohwasser was durch einzelne, einige oder alle Filtrationsmodule bzw. durch einzelne, einige oder alle Filtrationsblöcke gelaufen ist, also bereits gefiltert wurde, in den beispielhaften Umkehrosmoseblock 201 bzw. in ein beispielhaftes Umkehrosmosemodul geleitet werden über die beispielhaften Strömungswege 215 und 216.

Über ein beispielhaftes Mehrwegeventil, z.B. ein Dreiwegeventil 214 kann z.B. gesteuert werden, ob und/oder wie viel Wasser welches zuvor durch einzelne, einige oder alle Filtrationsmodule bzw. durch einzelne, einige oder alle Filtrationsblöcke gelaufen ist in den Umkehrosmoseblock 201 geleitet wird.

Die Vorrichtung 200 kann zudem so konfiguriert sein, das Wasser welches den beispielhaften Umkehrosmoseblock durchlaufen hat mit Wasser welches lediglich einzelne, einige oder alle Filtrationsmodule bzw. einzelne, einige oder alle Filtrationsblöcke durchlaufen hat vermischt werden kann.

Mit anderen Worten kann beispielsweise der Strömungsweg 204 für das Wasser welches wenigstens einer Umkehrosmose zugeführt wurde, mit dem Strömungsweg 205 für Wasser welches lediglich einzelne, einige oder alle Filtrationsmodule bzw. einzelne, einige oder alle Filtrationsblöcke durchlaufen hat verbunden werden, so dass beispielsweise eine Mischung von Wasser, gefiltert durch einzelne, einige oder alle Filtrationsmodule, und Wasser welches einer Umkehrosmose unterzogen wurde, der Abfüllvorrichtung 123 zugeführt werden kann.

Das Verhältnis der Anteile von Wasser aus den Filtrationsmodulen und der Anteile des Wassers aus dem Umkehrosmoseblock bzw. dem Umkehrosmosemodul bei der beispielhaften optionalen Mischung kann dabei variabel sein.

Wie oben beschrieben kann der Einsatz eines Umkehrosmoseverfahrensschrittes z.B. in Abhängigkeit eines vorgegebenen Leitwerts für das abzufüllende Wasser erfolgen. Hierzu kann die Vorrichtung beispielsweise verschiedene Sensoren zur Leitwertmessung aufweisen, beispielsweise einen ersten Sensor 207 am Eingang des Umkehrosmoseblockes bzw. des Umkehrosmosemodules und einen zweiten Sensor 208 am Ausgang des Umkehrosmoseblockes bzw. des Umkehrosmosemodules.

Je nach bestimmten Leitwert bzw. je nach Vorgabe kann beispielsweise eine Kontrollsteuereinheit 217 über die beispielhaften (gestrichelt dargestellten) Kommunikationsverbindungen 209, 210, 211 für Steuer- und/oder Kontrollsignale den Einsatz einer möglichen Umkehrosmose durch einen/den beispielhaften Umkehrosmoseblock bzw. durch ein Umkehrosmosemodul steuern und regeln.

Analog zur Vorrichtung 100 kann auch die Vorrichtung 200 dazu konfiguriert sein, von der Abfüllvorrichtung 123 nicht abgenommene Wasser, z.B. bei Überfüllung oder Defekt oder Füllstopp der Abfüllvorrichtung 123, zurück in den Eingang der Wasseraufbereitungsvorrichtung 101, bzw. zurück zu den Eingängen der Filtrationsmodule bzw. Filtrationsblöcke zu leiten.

Der Vollständigkeit halber sei bemerkt, dass die beispielhaft dargestellten Pfeile der beispielhaften Strömungswege in der Fig.1a und der Fig.1b beispielhafte Strömungsrichtungen anzeigen.

Wie erwähnt, kann die Vorrichtung 200 beispielsweise zudem auch dazu konfiguriert sein, dass z.B. Retentat aus einer Umkehrosmose 201 aus der Vorrichtung 200 über die beispielhaften Ausläufe bzw. Abflüsse bzw. Gully 202, 203 ausgeleitet werden kann.

Wie oben allgemein beschrieben, können die Filtrationsmodule bzw. die Filtrationsblöcke bzw. die Umkehrosmose unabhängig voneinander betreibbar sein und individuell oder gruppenweise gesteuert werden.

Die Steuerung der beispielhaften Filtrationsmodule bzw. der Filtrationsblöcke bzw. der Umkehrosmosemodule kann dabei z.B. in Abhängigkeit eines Füllstandes der Abfüllvorrichtung (z.B. gemessen durch einen nicht dargestellten Füllstandsmesser) und/oder in Abhängigkeit eines vorgegebenen Leitwerts des abzufüllenden Wassers erfolgen.

Es folgen 2 Blatt mit den Figuren Fig.1a und Fig.1b.

Die Bezugszeichen sind dabei wie folgt belegt.
**100** Beispielhafte Vorrichtung zum Aufbereiten und Abfüllen von Wasser
**101** Beispielhafte Wasseraufbereitungsvorrichtung
**102** Beispielhafter (erster) Filtrationsblock
   **102a** Beispielhaftes Filtrationsmodul
   **102b** Beispielhaftes Filtrationsmodul
   **102c** Beispielhaftes Filtrationsmodul
**103** Beispielhafter (zweiter) Filtrationsblock
   **103a** Beispielhaftes Filtrationsmodul
   **103b** Beispielhaftes Filtrationsmodul
   **103c** Beispielhaftes Filtrationsmodul
**104** Beispielhafter (dritter) Filtrationsblock
   **104a** Beispielhaftes Filtrationsmodul
   **104b** Beispielhaftes Filtrationsmodul
   **104c** Beispielhaftes Filtrationsmodul
**105** Beispielhafter Anschluss für Rohwasser, beispielhafte Rohwasserversorgung
**106** Beispielhafte Absperrvorrichtung, beispielhaftes Absperrventil zur Regelung bzw. Unterbrechung der Rohwasserversorgung
**107** Beispielhaftes Ventil, beispielhaftes Mehrwegeventil, beispielhaftes Zweiwegeventil
**108** Beispielhaftes Ventil, beispielhaftes Mehrwegeventil, beispielhaftes Zweiwegeventil
**109** Beispielhaftes Ventil, beispielhaftes Mehrwegeventil, beispielhaftes Zweiwegeventil
**110** Beispielhaftes Ventil, beispielhaftes Mehrwegeventil, beispielhaftes Zweiwegeventil
**111** Beispielhaftes Ventil, beispielhaftes Mehrwegeventil, beispielhaftes Zweiwegeventil
**112** Beispielhaftes Ventil, beispielhaftes Mehrwegeventil, beispielhaftes Zweiwegeventil
**113** Beispielhaftes Ventil, beispielhaftes Mehrwegeventil, beispielhaftes Zweiwegeventil
**114** Beispielhaftes Ventil, beispielhaftes Mehrwegeventil, beispielhaftes Zweiwegeventil
**115** Beispielhaftes Ventil, beispielhaftes Mehrwegeventil, beispielhaftes Zweiwegeventil
**116** Beispielhaftes Ventil, beispielhaftes Mehrwegeventil, beispielhaftes Zweiwegeventil
**117** Beispielhaftes Ventil, beispielhaftes Mehrwegeventil, beispielhaftes Zweiwegeventil
**118** Beispielhaftes Ventil, beispielhaftes Mehrwegeventil, beispielhaftes Zweiwegeventil
**119** Beispielhaftes Ventil, beispielhaftes Mehrwegeventil, beispielhaftes Zweiwegeventil
**120** Beispielhafter Strömungsweg, Beispielhafte Rückführweg für nicht von der Abfüllvorrichtung abgenommenes Wasser, z.B. überschüssiges Wasser bei Überfüllung der Abfüllvorrichtung bzw. bei Abfüllstopp
**121** Beispielhafte Verbindung bzw. beispielhafter Strömungsweg, beispielhafte direkte Kopplung, zwischen Wasseraufbereitungsvorrichtung und Abfüllvorrichtung zur Zufuhr / Versorgung der Abfüllvorrichtung mit aufbereitetem Wasser, d.h. Wasser das die Wasseraufbereitungsvorrichtung wenigstens einmal wenigstens teilweise durchlaufen hat
**122** Beispielhafter Zulauf, bzw. beispielhafter Strömungsweg, zur Zuführung von Rohwasser und/oder für zurück geführtes nicht von der Abfüllvorrichtung abgenommenes Wasser
**123** Beispielhafte Abfüllvorrichtung
**124** Beispielhafte von der Abfüllvorrichtung abgefüllte Behälter
**125** Beispielhaftes Ventil, beispielhaftes Mehrwegeventil, beispielhaftes Zweiwegeventil
**126** Beispielhaftes Ventil, beispielhaftes Mehrwegeventil, beispielhaftes Zweiwegeventil

**200** Beispielhafte Vorrichtung zum Aufbereiten und Abfüllen von Wasser
**201** Beispielhaftes Umkehrosmosemodul, beispielhafter Umkehrosmoseblock
**202** Beispielhafter Ablauf des Umkehrosmosemodules / des Umkehrosmoseblockes, z.B. Ablauf für Retentat
**203** Beispielhafter Abfluss des Umkehrosmosemodules / des Umkehrosmoseblockes zur Ausleitung von Retentat, beispielhafter Gully
**204** Beispielhafter Auslauf/Ausgang des Umkehrosmosemodules / des Umkehrosmoseblockes für Permeat des Umkehrosmosemodules / des Umkehrosmoseblockes
**205** Beispielhafte Verbindung bzw. beispielhafter Strömungsweg, beispielhafte direkte Kopplung, zwischen Wasseraufbereitungsvorrichtung und Abfüllvorrichtung zur Zufuhr / Versorgung der Abfüllvorrichtung mit aufbereitetem Wasser, Beispielhafter Bypass zur Umgehung des Umkehrosmosemodules / des Umkehrosmoseblockes
**206** Beispielhafte Verbindung bzw. beispielhafter Strömungsweg, beispielhafte direkte Kopplung, zwischen Wasseraufbereitungsvorrichtung und Abfüllvorrichtung zur Zufuhr / Versorgung der Abfüllvorrichtung mit aufbereitetem Wasser, d.h. Wasser das die Wasseraufbereitungsvorrichtung wenigstens einmal wenigstens teilweise durchlaufen hat
**207** Beispielhafter Sensor zur Messung des Leitwerts bzw. der elektrischen Leitfähigkeit von Wasser
**208** Beispielhafter Sensor zur Messung des Leitwerts bzw. der elektrischen Leitfähigkeit von Wasser
**209** Beispielhafte Kommunikationsverbindung für Steuer- und/oder Kontrollsignale
**210** Beispielhafte Kommunikationsverbindung für Steuer- und/oder Kontrollsignale
**211** Beispielhafte Kommunikationsverbindung für Steuer- und/oder Kontrollsignale
**212** Beispielhafte Verbindung für Steuer- und/oder Kontrollsignale
**213** Beispielhafter Strömungsweg, Beispielhafter Rückführweg für nicht von der Abfüllvorrichtung abgenommenes Wasser, z.B. überschüssiges Wasser bei Überfüllung der Abfüllvorrichtung bzw. bei Abfüllstopp
**214** Beispielhaftes Mehrwegeventil, beispielhaftes Dreiwegeventil
**215** Beispielhafter Ausgang, beispielhafter Strömungsweg für durch die Filtrationsmodule bzw. durch die Filtrationsblöcke aufbereitetes Wasser
**216** Beispielhafter Strömungsweg
**217** Kontrollsteuereinheit, oder Teil einer Kontrollsteuereinheit

## Patentansprüche

1. Vorrichtung (100) zum Aufbereiten und Abfüllen von Wasser, umfassend:
eine Wasseraufbereitungsvorrichtung (101) mit wenigstens einem Filtrationsmodul (102a),
wenigstens eine Abfüllvorrichtung (123) zum Abfüllen, insbesondere zum Abfüllen von Behältern (124), von durch die Wasseraufbereitungsvorrichtung (101) aufbereiteten Wassers,
**dadurch gekennzeichnet, dass**
die Wasseraufbereitungsvorrichtung (101) direkt (121) an die Abfüllvorrichtung (123) gekoppelt ist.

2. Vorrichtung (100) nach Anspruch 1, wobei die Abfüllvorrichtung (123) einen Zwischenpuffer, z.B. eine Ringkammer, zum Zwischenpuffern von aus der Wasseraufbereitungsvorrichtung (101) zugeführtem Wasser aufweist.

3. Vorrichtung (100) nach einem der vorherigen Ansprüche, wobei die Wasseraufbereitungsvorrichtung (101) eine Mehrzahl von Filtrationsmodulen (102a, 102b, 102c) aufweist, wobei die Filtrationsmodule (102a, 102b, 102c) unabhängig voneinander betreibbar sind.

4. Vorrichtung (100) nach dem vorherigen Anspruch dazu konfiguriert, dass ein Teil der Filtrationsmodule während des Betriebs der Vorrichtung gereinigt und/oder rückgespült werden kann.

5. Vorrichtung (100, 200) nach einem der vorherigen Ansprüche, wobei das wenigstens eine Filtrationsmodul (102a) dazu konfiguriert ist eine Membranfiltration durchzuführen, beispielsweise eine Membranfiltration zur Mikrofiltration und/oder Ultrafiltration und/oder Nanofiltration, und/oder die Wasseraufbereitungsvorrichtung (101) wenigstens ein Umkehrosmosemodul (201) aufweist, welches dazu konfiguriert ist eine Umkehrosmose durchzuführen.

6. Vorrichtung (100) nach einem der vorherigen Ansprüche, umfassend wenigstens einen Füllstandsmesser der dazu konfiguriert ist einen Wasserfüllstand in der Abfüllvorrichtung zu messen, und wobei die Vorrichtung dazu konfiguriert ist, die Wasseraufbereitungsvorrichtung in Abhängigkeit der Messungen des Füllstandsmesser zu steuern.

7. Vorrichtung (100) nach einem der vorherigen Ansprüche, dazu konfiguriert, dass bei Überfüllung der Abfüllvorrichtung (123) überschüssiges Wasser zurück geleitet wird an die Wasseraufbereitungsvorrichtung.

8. Verfahren zum Aufbereiten und Abfüllen von Wasser, umfassend:
eine Aufbereitung von Wasser in einer Wasseraufbereitungsvorrichtung (101) mit wenigstens einem Filtrationsmodul (102a),
eine direkte unmittelbare Weiterleitung von durch die Wasseraufbereitungsvorrichtung (101) aufbereitetem Wasser an eine Abfüllvorrichtung (123) zum Abfüllen, insbesondere zum Abfüllen von Behältern (124).

9. Verfahren nach dem vorherigen Anspruch, wobei das wenigstens eine Filtrationsmodul (102a), oder eine Mehrzahl von Filtrationsmodulen (102a, 102b, 102c) eine Mikrofiltration und/oder Ultrafiltration und/oder Nanofiltration des aufzubereitenden Wassers durchführt, und/oder die Wasseraufbereitungsvorrichtung eine Umkehrosmose des aufzubereitenden Wassers durchführt, bevor das aufbereitete Wasser direkt und unmittelbar an die Abfüllvorrichtung weitergeleitet wird.

10. Verfahren nach einem der vorherigen Ansprüche, wobei der Leitwert des Wassers vor, während und nach der Aufbereitung durch die Wasseraufbereitungsvorrichtung (101) gemessen wird.

11. Verfahren nach dem vorherigen Anspruch, wobei die Wasseraufbereitungsvorrichtung (101) wenigstens eine Umkehrosmose des aufzubereitenden Wassers durchführt und wenigstens eine Mikrofiltration und/oder Ultrafiltration und/oder Nanofiltration des aufzubereitenden Wassers durchführt und in Abhängigkeit eines vorgebbaren Leitwerts für das abzufüllende Wasser, dass durch Mikrofiltration und/oder Ultrafiltration und/oder Nanofiltration filtrierte Wasser mit Wasser aus der wenigstens einen Umkehrosmose vermischt, bevor das aufbereitete Wasser direkt und unmittelbar an die Abfüllvorrichtung (123) weitergeleitet wird.

12. Verfahren nach einem der Ansprüche 8 bis 10, wobei wenigstens eine Umkehrosmose im Kreislaufverfahren durchgeführt wird.

13. Verfahren nach einem der vorherigen Verfahrensansprüche, worin ein Füllstand der Abfüllvorrichtung (123) bestimmt wird und wobei in Abhängigkeit des bestimmten Füllstandes der Abfüllvorrichtung einzelne Komponenten der Wasseraufbereitungsvorrichtung (101), beispielsweise einzelne Filtrationsmodule (102a, 102b, 102c) und/oder einzelne Umkehrosmosemodule (201) abgeschaltet und/oder zugeschaltet und/oder gesteuert werden.

14. Verfahren nach einem der vorherigen Verfahrensansprüche, worin bei Überfüllung der Abfüllvorrichtung (123) überschüssiges Wasser zurück geleitet wird an die Wasseraufbereitungsvorrichtung (101) und/oder ein Teilstrom von aufbereitetem Wasser und/oder überschüssigem Wasser zum Rückspülen von Filtrationsmodulen verwendet wird.

15. Verfahren nach einem der vorherigen Verfahrensansprüche, worin vor Inbetriebnahme mittels Druckbeaufschlagung die Integrität einzelner, einiger oder aller Module der Wasseraufbereitungsvorrichtung geprüft wird.
